# EUROPEAN PATENT APPLICATION

(11) **EP 4 714 861 A1**
(43) Date of publication of application: **25.03.2026**
(21) Application number: 24807185.4
(22) Date of filing: 13.05.2024
(51) Int. Cl.: B65G 1/00, B65G 1/137

(54) **AUTOMATIC CONVEYANCE SYSTEM**

(30) Priority: 18.05.2023 JP 2023082200
(71) Applicant: KABUSHIKI KAISHA TOYOTA JIDOSHOKKI, Kariya-shi, Aichi 448-8671 (JP); National University Corporation Hokkaido University, Hokkaido 060-0808 (JP)
(72) Inventor: KONDO Toyohiro, Kariya-shi, Aichi 448-8671 (JP); SODA Hiroki, Kariya-shi, Aichi 448-8671 (JP); UEDA Naoharu, Kariya-shi, Aichi 448-8671 (JP); NAWA Masamichi, Kariya-shi, Aichi 448-8671 (JP); KATO Norihiko, Kariya-shi, Aichi 448-8671 (JP); NODA Itsuki, Sapporo-shi, Hokkaido 060-0808 (JP); IIDA Takumi, Sapporo-shi, Hokkaido 060-0808 (JP)
(74) Representative: TBK
(86) International application number: PCT/JP2024/017642
(87) International publication number: WO 2024/237233

(57) **Abstract**

An automated transport system includes transport devices and a management device for managing the transport devices. The management device executes a task assignment process for assigning a task to each transport device and a task optimization process for exchanging transport tasks if the calculated transport cost for when the assigned transport tasks are exchanged between two separate transport devices is less than the transport cost for processing the assigned transport tasks or if the calculated transport cost for when an assigned task is exchanged with a pending task is less than the transport cost if the pending transport task were to be assigned to one of the transport devices. The management device executes the task optimization process during a period in which the transport devices are processing the tasks assigned in the task assignment process.

## Description

### TECHNICAL FIELD

The present disclosure relates to an automated transport system.

### BACKGROUND ART

Patent Literature 1 describes a batch generation device that generates task batches. The task batches are lists of task instructions given to workers or robots for picking stored products from a warehouse. The batch generation device calculates the cost of picking tasks if task instructions were to be exchanged between task batches. The picking cost corresponds to, for example, the total distance traveled by the workers or the robots. If the cost when exchanging task instructions is less than the cost when not exchanging task instructions, the batch generation device exchanges task instructions between the actual task batches. The workers or the robots perform picking tasks in accordance with the task batches generated in this manner.

### CITATION LIST

### Patent Literature

Patent Literature 1: JP2020-175978A

### SUMMARY OF INVENTION

### Technical Problem

In Patent Literature 1, the batch generation device exchanges task instructions between task batches only when generating the task batches. Thus, when a picking task is being performed by the workers or the robots, it is difficult for the batch generation device to cope with changing situations, such as when products are added or canceled and when the number of workers or robots increases or decreases. Therefore, depending on when a task batch is generated, even when there is a task batch that can be performed at a lower cost, the picking task will be performed in accordance with the task batch that was first generated.

### Solution to Problem

In one general aspect, an automated transport system includes transport devices configured to process tasks including a transport task for transporting an item from a loading dock to a rack or transporting the item from the rack to the loading dock and a management device configured to manage the transport devices. The management device is configured to execute a task assignment process and a task optimization process. The task assignment process assigns the tasks to the transport devices and the task optimization process exchanges the transport tasks when any one of following conditions is satisfied: the management device calculates a transport cost for when the transport task assigned in the task assignment process is exchanged between two separate ones of the transport devices, and the calculated transport cost is less than a transport cost of the tasks originally assigned in the task assignment process; and the management device calculates the transport cost for when the transport task assigned in the task assignment process is exchanged with a pending transport task and the calculated transport cost is less than the transport cost if the pending transport task were to be assigned to one of the transport devices. The management device executes the task optimization process during a period in which the transport devices are processing the tasks assigned in the task assignment process.

### BRIEF DESCRIPTION OF DRAWINGS

[Fig. 1] Fig. 1 is a block diagram illustrating the structure of an automated transport system.
[Fig. 2] Fig. 2 is a schematic diagram illustrating a warehouse and a transport device.
[Fig. 3] Fig. 3 is a diagram illustrating tasks of the transport device.
[Fig. 4] Fig. 4 is an interaction diagram illustrating a process executed by the transport device and a management device.
[Fig. 5] Fig. 5 is a flowchart illustrating a task optimization process.
[Fig. 6] Fig. 6 is a diagram illustrating an assigned state of tasks before the task optimization process.
[Fig. 7] Fig. 7 is a diagram illustrating the assigned state of tasks after the task optimization process.

### DESCRIPTION OF EMBODIMENTS

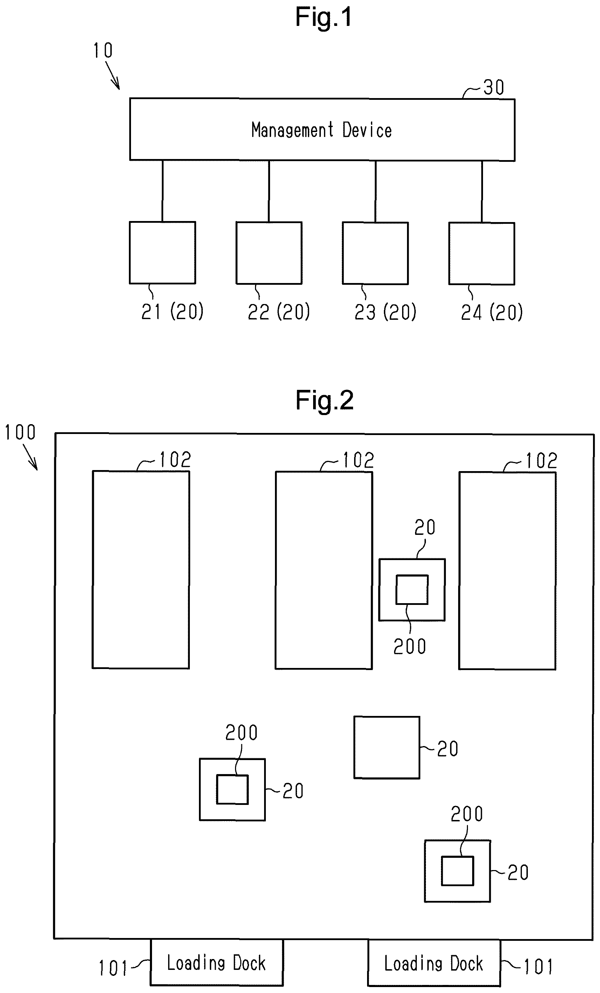

One embodiment of an automated transport system will now be described with reference to Figs. 1 to 7. The automated transport system of the present embodiment is used to store items in and retrieve items from a warehouse.

### <Structure of Automated Transport System>

As shown in Fig. 1, an automated transport system 10 includes transport devices 20 and a management device 30 that manages the transport devices 20. The transport devices 20 of the present embodiment are transfer robots. The automated transport system 10 of the present embodiment includes four transport devices 20. The four transport devices 20 are referred to as a first transport device 21, a second transport device 22, a third transport device 23, and a fourth transport device 24 so as to distinguish them from one another. The management device 30 is connected to each transport device 20 through wireless communication, which will be described later.

As shown in Fig. 2, a warehouse 100 includes loading docks 101. In the present embodiment, each loading dock 101 serves both as an entrance for storing items 200, which are received from outside the warehouse 100 and stored inside the warehouse 100, and as an exit for retrieving the items 200, which are sent out of the warehouse 100 from inside the warehouse 100. Further, the warehouse 100 includes racks 102. In the present embodiment, the racks 102 include shelves. In the present embodiment, each rack 102 is used to hold items 200 that are received from outside the warehouse 100 and stored in the warehouse 100, and to hold items 200 that are stored in the warehouse 100 and retrieved from the warehouse 100.

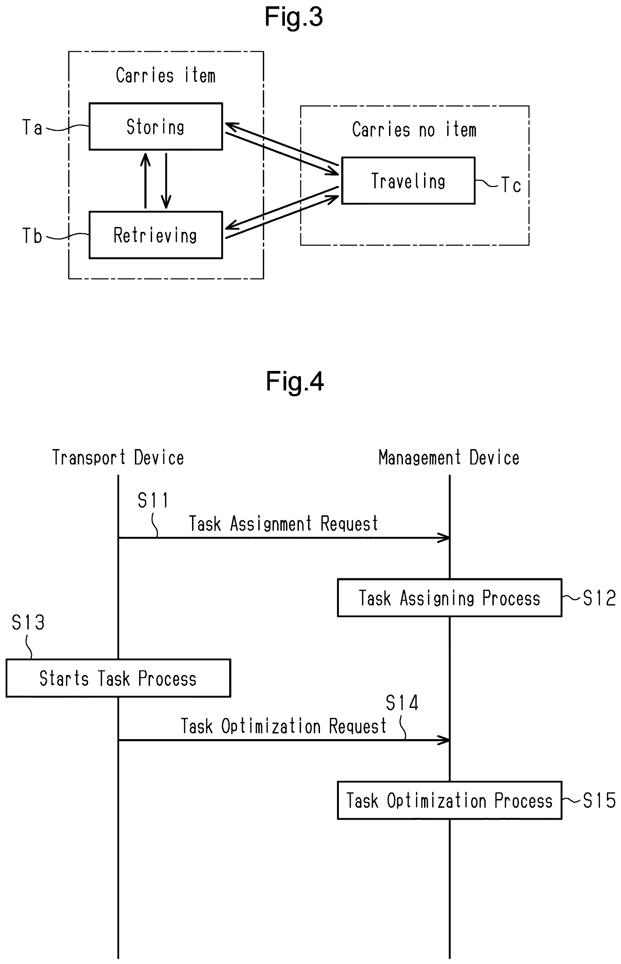

As shown in Fig. 3, each transport device 20 is configured to process three tasks, namely, a storing task Ta, a retrieving task Tb, and a traveling task Tc.

The storing task Ta is a transport task for transporting an item 200 from a loading dock 101 to a rack 102. More specifically, a transport device 20 receives an item 200 at a predetermined loading dock 101. The transport device 20 carries the item 200 to a predetermined rack 102. The transport device 20 arranges the item 200 in the predetermined rack 102.

The retrieving task Tb is a transport task for transporting an item 200 from a rack 102 to a loading dock 101. More specifically, a transport device 20 receives an item 200 from a predetermined rack 102. The transport device 20 carries the item 200 to a predetermined loading dock 101. The transport device 20 arranges the item 200 on the predetermined loading dock 101.

The traveling task Tc is a task for traveling inside the warehouse 100. The traveling task Tc is performed after a transport task is completed to process a subsequent transport task. For example, the transport device 20 performs a storing task Ta to transport an item 200 from a loading dock 101 to a rack 102. Subsequently, when performing a retrieving task Tb to transport an item 200 from another rack 102 to a loading dock 101, the transport device 20 moves to the other rack 102. In another example, the transport device 20 performs a storing task Ta to transport an item 200 from a loading dock 101 to a rack 102. Subsequently, when performing another storing task Ta to transport an item 200 from a loading dock 101 to a rack 102, the transport device 20 moves from the rack 102 to the loading dock 101. In a further example, the transport device 20 performs a retrieving task Tb to transport an item 200 from a rack 102 to a loading dock 101. Subsequently, when performing another retrieving task Tb to transport an item 200 from a rack 102 to a loading dock 101, the transport device 20 moves from the loading dock 101 to the rack 102.

When a transport device 20 performs a storing task Ta to transport an item 200 from a loading dock 101 to a rack 102, and the transport device 20 subsequently performs a retrieving task Tb to transport the item 200 from the same rack 102 to a loading dock 101, the transport device 20 does not perform a traveling task Tc. When a transport device 20 performs a retrieving task Tb to transport an item 200 from a rack 102 to a loading dock 101, and the transport device 20 subsequently performs a storing task Ta to transport an item 200 from the same loading dock 101 to a rack 102, the transport device 20 does not perform a traveling task Tc.

In this manner, the transport device 20 is carrying an item 200 when performing the transport tasks of the storing task Ta and the retrieving task Tb. However, the transport device 20 does not carry an item 200 when performing the traveling task Tc.

The management device 30 includes a processor and a storage. Examples of the processor are a central processing unit (CPU), a graphics processing unit (GPU), or a digital signal processor (DSP). The storage includes a Random Access Memory (RAM) and/or a Read Only Memory (ROM). The storage stores program codes or instructions configured to be executed by the processor. The storage, that is, a computer-readable medium, includes any medium accessible by a versatile or dedicated computer. The management device 30 may be a hardware circuit such as an application specific integrated circuit (ASIC), a field programmable gate array (FPGA), or the like. The management device 30, which is processing circuitry, may include one or more processors that are executed in accordance with the computer programs, one or more hardware circuits such as ASIC and/or FPGA, or a combination of such processors and hardware circuits.

Each transport device 20 and the management device 30 are configured to communicate with each other. More specifically, the transport devices 20 and the management device 30 each include a wireless communication unit (not shown). The transport devices 20 and the management device 30 use the corresponding wireless communication units to communicate with one another through wireless communication. Any wireless communication protocol may be employed.

Each transport device 20 transmits its position information in the warehouse 100 to the management device 30. This allows the management device 30 to acknowledge the location of each transport device 20 in the warehouse 100. Further, the transport device 20 transmits its task processing state to the management device 30. This allows the management device 30 to acknowledge the task processing state of each transport device 20.

The management device 30 includes a transport list of the items 200 awaiting transportation. The transport list includes information of the transport mode (storing or retrieving) of the items 200. Further, the transport list includes information on the position of the items 200. When an item 200 is awaiting storage, the position information of the item 200 includes, for example, information of the loading dock 101 where the item 200 is located and information of the rack 102 where the item 200 is to be arranged. When an item 200 is awaiting retrieval, the position information of the item 200 includes, for example, information of the rack 102 where the item 200 is located and information of the loading dock 101 where the item 200 is to be arranged.

### Task Assignment Process

The management device 30 is configured to execute a task assignment process that assigns a task to each transport device 20. More specifically, the management device 30 assigns a task to each transport device 20 based on information of a storage-retrieval list, the position information of the transport devices 20, and the task processing state of the transport devices 20. The management device 30 assigns, to a transport device 20, a transport task (storing task Ta or retrieving task Tb) corresponding to the transport mode (receiving or shipping) of an item 200 awaiting transportation. When there are multiple items 200 that are to be transported, the management device 30 assigns multiple transport tasks to the transport devices 20. Further, when a traveling task Tc is required between transport tasks, the management device 30 assigns a traveling task Tc to the transport device 20. When the management device 30 assigns multiple tasks to the transport device 20, the order of the tasks processed are specified. When performing the task assignment process, the management device 30 may determine the assignments through any optimization process or determine the assignments in order of task receival or in order of priority.

### Task Optimization Process

The management device 30 is configured to execute a task optimization process. When a task can be assigned in a manner allowing for higher transport efficiency than the task assigned in the task assignment process, the task optimization process changes the assigned state of the task so that the task can be performed with higher transport efficiency.

More specifically, the management device 30 calculates the transport cost for processing the originally assigned tasks. The transport cost decreases as the transport efficiency increases. In the present embodiment, the transport cost is the average time for processing a task with each transport device 20. The transport cost for processing the originally assigned tasks is calculated based on the position information of the item 200, the position information of the transport device 20, and the assigned state of the task assigned in the task assignment process.

The management device 30 determines whether to exchange transport tasks assigned in the task assignment process between two transport devices 20 or determines whether to exchange a transport task assigned in the task assignment process with an unassigned transport task. More specifically, the management device 30 of the present embodiment calculates the transport cost for when two transport devices 20 exchange transport tasks that were assigned in the task assignment process (hereafter, referred to as "transport cost when exchanging tasks"). The transport cost when exchanging tasks is calculated based on the position information of the items 200, the position information of the transport devices 20, and the state of the assigned tasks when the transport tasks are exchanged. The management device 30 exchanges the transport tasks if the calculated transport cost when exchanging transport tasks is less than the transport cost of the tasks originally assigned in the task assignment process. In other words, the management device 30 actually exchanges the tasks assigned in the task assignment process between the two transport devices 20.

The management device 30 of the present embodiment determines whether to exchange the transport tasks assigned in the task assignment process between a transport device 20 that transmitted a task optimization request and another transport device 20. In the description hereafter, the transport device 20 that transmitted a task optimization request is referred to as an exchange subject device, and the other transport device 20 is referred to as an exchange candidate device.

The management device 30 of the present embodiment determines whether to exchange the transport task assigned to the exchange subject device in the task assignment process with the transport task assigned to the exchange subject device in the task assignment process. The transport tasks assigned to the exchange subject device and the exchange candidate device that are subject to exchange are transport tasks that have not yet been processed and are pending when the management device 30 starts execution of the task optimization process. In the description hereafter, among the transport tasks assigned to the exchange subject device, a pending transport task that is to be exchanged is referred to as an exchange subject task. Further, among the transport tasks assigned to the exchange candidate device, a pending transport task that is to be exchanged is referred to as an exchange candidate task.

The management device 30 of the present embodiment calculates the task exchange transport cost when the exchange subject task of the exchange subject device is exchanged with the exchange candidate task of the exchange candidate device. When the calculated task exchange transport cost is less than the calculated transport cost for processing the tasks originally assigned in the task assignment process, the management device 30 exchanges the exchange subject task of the exchange subject device with the exchange candidate task of the exchange candidate device.

### Processes Executed by Automated Transport System

A process executed by the automated transport system 10 will now be described.

As shown in Fig. 4, in step S11, a transport device 20 transmits a task assignment request to the management device 30. The transport device 20 transmits the task assignment request when it has no assigned task or when it has completed an assigned task.

In step 12, when the management device 30 receives the task assignment request from the transport device 20, the management device 30 executes the task assignment process and assigns a task to the transport device 20.

In step 13, the transport device 20 starts processing the task assigned in the task assignment process. When the transport device 20 is assigned with multiple tasks in the task assignment process, the tasks are processed in the specified order.

In step S14, the transport device 20 transmits a task optimization request to the management device 30. In other words, the transport device 20 transmits the task optimization request while processing the task or tasks assigned in the task assignment process.

In step S15, when the management device 30 receives the task optimization request from the transport device 20, the management device 30 executes the task optimization process. The management device 30 executes the task optimization process during a period in which the transport device 20 processes the task or tasks assigned in the task assignment process. The period during which the transport device 20 processes the assigned task or tasks is not a period during which the transport device 20 is performing a single task. Rather, the period during which the transport device 20 processes the assigned task or tasks refers to the period in which the transport device 20 is undergoing a transportation operation to perform all of the tasks assigned in the task assignment process. This period is from when the task assignment process ends to when all of the tasks are completed.

In the present embodiment, a task exchangeable period during which transport tasks can be exchanged is set for the transport device 20. In the present embodiment, the task exchangeable period is a period in which the transport device 20 is not carrying an item 200; that is, a period in which the transport device 20 is processing a traveling task Tc. The transport device 20 transmits the task optimization request to the management device 30 during the task exchangeable period. The management device 30 executes the task optimization process during the task exchangeable period.

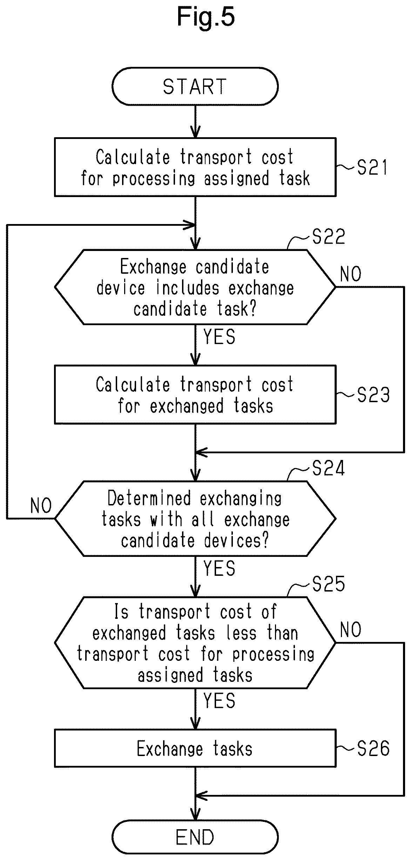

As shown in Fig. 5, in step S21, the management device 30 calculates the transport cost for processing originally assigned task.

In step S22, the management device 30 determines whether an exchange candidate device has an exchange candidate task. In other words, the management device 30 determines whether a transport device 20 that is a candidate for exchanging tasks has a pending transport task. If the exchange candidate device has an exchange candidate task (step S22: YES), the management device 30 proceeds to step S23.

In step S23, the management device 30 calculates a task exchange transport cost, which is the transport cost for exchanging the exchange subject task of the exchange subject device with the exchange candidate task of the exchange candidate device. In other words, the task exchange transport cost is the transport cost for assignment of an exchange candidate task to the exchange subject device, assignment of an exchange subject task to the exchange candidate device, and assignment of a traveling task Tc.

When the exchange candidate device does not have an exchange candidate task (step S22: NO), the transport task of the exchange candidate device is not exchanged with the transport task of the exchange subject device. Thus, the management device 30 proceeds to step S24 without calculating the task exchange transport cost.

In step S24, the management device 30 checks whether the determination of whether to exchange transport tasks with the exchange subject device has been performed on every one of the exchange candidate devices. When the management device 30 determines that the determination of whether to exchange transport tasks with the exchange subject device has been performed on every one of the exchange candidate devices (step S24: YES), the management device 30 proceeds to step S25.

When the management device 30 determines that the determination of whether to exchange transport tasks with the exchange subject device has not been performed on every one of the exchange candidate devices (step S24: NO), the management device 30 returns to step S22. When the management device 30 returns to step S22, the management device 30 determines whether or not to exchange transport tasks between the exchange subject device and another exchange candidate device, which has not yet undergone the determination of whether to exchange tasks.

When the task exchange transport cost calculated in step S23 is less than the transport cost for processing the originally assigned task calculated in step S21 (step S25: YES), the exchange subject task of the exchange subject device is exchanged with the exchange candidate task of the exchange candidate device in step S26. Further, when the task exchange transport cost is less than the transport cost for processing the originally assigned task in more than one exchange candidate device, the management device 30 exchanges the transport tasks between the exchange subject device and the one of the exchange candidate devices having the lowest transport cost. Accordingly, the tasks assigned to the transport devices 20 are changed from the tasks originally assigned in the task assignment process so that the transport cost becomes the lowest.

When the task exchange transport cost calculated in step S23 is greater than or equal to the transport cost for processing the originally assigned task calculated in step S21 (step S25: NO), the management device 30 does not exchange transport tasks between the exchange subject device and the exchange candidate device. In this case, the tasks assigned to each transport device 20 are not changed from the tasks originally assigned in the task assignment process.

Each transport device 20 processes the task in the state optimized by the task optimization process.

### <Specific Examples>

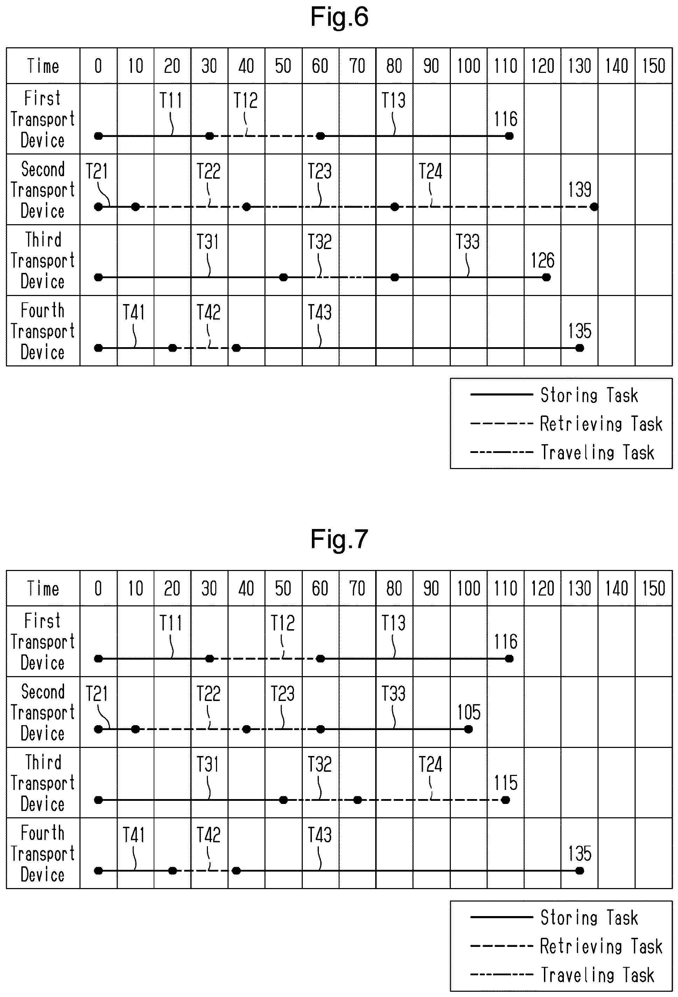

Fig. 6 shows one example of tasks assigned in the task assignment process. As shown in Fig. 6, the management device 30 assigns tasks to the first transport device 21 in the order of a storing task T11, a retrieving task T12, and a storing task T13. The management device 30 assigns the tasks to the second transport device 22 in the order of a storing task T21, a retrieving task T22, a traveling task T23, and a retrieving task T24. The management device 30 assigns the tasks to the third transport device 23 in the order of a storing task T31, a traveling task T32, and a storing task T33. The management device 30 assigns the tasks to the fourth transport device 24 in the order of a storing task T41, a retrieving task T42, and a storing task T43.

In this case, the second transport device 22 processes the traveling task T23 after completing the retrieving task T22. In other words, the second transport device 22 enters a task exchangeable period after completing the retrieving task T22. Thus, the second transport device 22 transmits a task optimization request to the management device 30. The management device 30 receives the task optimization request from the second transport device 22 and, thus, starts the task optimization process.

In this example, the exchange subject device is the second transport device 22. The second transport device 22 has a pending transport task, which is the retrieving task T24. Thus, the exchange subject task is the retrieving task T24. Further, the exchange candidate devices are the devices other than the second transport device 22; namely, the first transport device 21, the third transport device 23, and the fourth transport device 24.

In step S21, the management device 30 calculates the transport cost for processing the originally assigned tasks. In the state in which tasks are as originally assigned in the task assignment process, the task processing time of the first transport device 21 is 116. The task processing time of the second transport device 22 is 139. The task processing time of the third transport device 23 is 126. The task processing time of the fourth transport device 24 is 135. Thus, the transport cost for processing the tasks as originally assigned is 129.

The management device 30 determines whether to exchange the retrieving task T24 of the second transport device 22 with the transport task assigned to the first transport device 21. When the management device 30 starts the task optimization process, the first transport device 21 has a pending storing task T13. In other words, the first transport device 21 has an exchange candidate task (step S22: YES). Thus, in step S23, the management device 30 calculates the transport cost for processing exchanged tasks when the retrieving task T24 of the second transport device 22 is exchanged with the storing task T13 of the first transport device 21. In this example, the transport cost for processing the exchanged tasks, in which the retrieving task T24 of the second transport device 22 is exchanged with the storing task T13 of the first transport device 21, is greater than the transport cost for processing the assigned tasks.

In this case, the management device 30 has not yet determined whether to exchange the transport tasks of the third transport device 23 and the fourth transport device 24 with the transport tasks of the second transport device 22 (step S24: NO). Thus, the management device 30 returns to step S22.

The management device 30 determines whether to exchange the retrieving task T24 of the second transport device 22 with the transport tasks assigned to the third transport device 23. When the management device 30 starts the task optimization process, the third transport device 23 has a pending storing task T33. In other words, the third transport device 23 has an exchange candidate task (step S22: YES). Thus, in step S23, the management device 30 calculates the transport cost for processing exchanged tasks when the retrieving task T24 of the second transport device 22 is exchanged with the storing task T33 of the third transport device 23.

As shown in Fig. 7, in this example, when the retrieving task T24 of the second transport device 22 is exchanged with the storing task T33 of the third transport device 23, the task processing time of the first transport device 21 is 116. The task processing time of the second transport device 22 is 105. The task processing time of the third transport device 23 is 115. The task processing time of the fourth transport device 24 is 135. Thus, the transport cost for processing exchanged tasks is approximately 118.

When the storing task T33 is assigned to the second transport device 22 and the retrieving task T24 is assigned to the third transport device 23, the task processing time of the second transport device 22 and the task processing time of the third transport device 23 decrease. Thus, the transport cost for processing the exchanged tasks is lower than the transport cost for processing the tasks as originally assigned.

In this case, the management device 30 has not determined whether to exchange the transport tasks of the fourth transport device 24 with the transport tasks of the second transport device 22 (step S24: NO). Thus, the management device returns to step S22.

The management device 30 determines whether to exchange the retrieving task T24 of the second transport device 22 with the transport tasks assigned to the fourth transport device 24. When the management device 30 starts the task optimization process, the fourth transport device 24 has already started processing the storing task T43 and therefore, does not have a pending transport task. Thus, the fourth transport device 24 does not have an exchange candidate task (step S22: NO).

In this case, the management device 30 has determined whether to exchange the transport tasks of the second transport device 22 with the transport tasks of the first transport device 21, the third transport device 23, and the fourth transport device 24 (step S24: YES). Thus, the management device 30 proceeds to step S25.

As described above, in this example, the transport cost for processing the exchanged tasks when the retrieving task T24 of the second transport device 22 is exchanged with the storing task T33 of the third transport device 23 is less than the transport cost for processing the originally assigned tasks (step S25: YES). Thus, in step S26, the management device 30 exchanges the retrieving task T24 of the second transport device 22 with the storing task T33 of the third transport device 23.

### [Operation and Advantages of Present Embodiment]

The operation and advantages of the present embodiment will now be described.
(1) The management device 30 is configured to execute the task optimization process. More specifically, the management device 30 calculates the transport cost for processing exchanged tasks when the transport tasks originally assigned in the task assignment process are exchanged between two transport devices 20. If the calculated transport cost for processing the exchanged tasks is less than the transport cost for processing the originally assigned tasks, the management device 30 exchanges the transport tasks. Thus, when tasks can be assigned in a manner in which the transport efficiency is higher than the tasks originally assigned in the task assignment process, the tasks are assigned accordingly. Thus, the transport efficiency may be improved. Further, the management device 30 executes the task optimization process when a transport device 20 is processing the tasks originally assigned in the task assignment process. Therefore, even if an item 200 is added or cancelled or the number of the transport devices 20 increases or decreases while a transport device 20 is processing the tasks, the transport device 20 can cope with such a change. Accordingly, regardless of when the task assignment process is performed, the transport efficiency may be improved.
(2) The transport device 20 transmits the task optimization request to the management device 30. The management device 30 executes the task optimization process when the task optimization request is received from the transport device 20. Thus, in contrast with, for example, when the management device 30 is executing the task optimization process in predetermined cycles, the task optimization process is executed when suitable.
(3) The task exchangeable period is set for the transport device 20. The transport device 20 sends a task optimization request to the management device 30 during the task exchangeable period. The management device 30 executes the task optimization process during the task exchangeable period. Thus, in contrast with when, for example, the transport device 20 transmits the task optimization request to the management device 30 in predetermined cycles and the task optimization request is executed in predetermined cycles by the management device 30, the transport device 20 executes the task optimization process when suitable.
(4) If the transport exchangeable period were to be set in a transport task period in which, for example, the transport device 20 is carrying an item 200, the transport device 20 will need to stop processing the transport task in order to exchange the transport tasks during the task optimization process. In this regard, in the present embodiment, the task exchangeable period is set during the traveling task Tc, which is the period in which the transport device 20 is not carrying an item 200. Thus, the transport tasks may be exchanged without stopping the transport task that is in process. Accordingly, the transport tasks are exchanged efficiently.
(5) The management device 30 executes the task optimization process to decrease the average task processing time of the transport device 20, which is the transport cost. When the average task processing time of the transport device 20 decreases, energy efficiency is improved.
(6) In the present embodiment, the management device 30 executes the task optimization process while the transport devices 20 are processing the tasks originally assigned in the task assignment process. Thus, for example, the load of the task assignment process is less than when the management device 30 simulates all potential task combinations in the task assignment process to minimize the transport cost.

### Modifications

The above embodiments may be modified as described below. The above embodiments and the following modifications may be combined as long as the combined modifications remain technically consistent with each other.

The automated transport system 10 may be used to perform tasks other than storing items 200 in the warehouse 100 and retrieving items 200 from the warehouse 100. The automated transport system 10, for example, may be used to perform catering and bussing operations in a restaurant or be used to perform transport operations in a factory. When the automated transport system 10 is used at a restaurant for catering and bussing operations, the transport device 20 is a delivery robot. The transport device 20, for example, may deliver dishes of food from the kitchen to a table or transport used tableware or the like from a table to the kitchen.

In the above embodiment, the loading dock 101 serves both as an entrance and an exit. However, the entrance and the exit may be separate.

In the above embodiment, the racks 102 serve to both hold the stored items 200 and hold the items 200 that are to be retrieved. However, racks 102 for holding the stored received items 200 may be separate from racks 102 for holding the items 200 that are to be retrieved.

The number of the loading dock 101 may be changed.

The number of the racks 102 may be changed.

The number of the transport devices 20 may be changed as long as there are two or more transport devices 20.

The transport device 20 is not limited to a transporting robot as long as the transport device 20 is capable of transporting an item 200. The transport device 20 may be, for example, a drone.

The transport cost is not limited to the average task processing time of the transport devices 20. The transport cost may be changed as long as the transport cost decreases as the transport efficiency becomes higher.

The transport cost may be, for example, the time when the final one of the tasks of the transport devices 20 is completed. The transport cost may be, for example, the total distance traveled by the transport device 20. The transport cost may be, for example, a suspension time of the transport devices 20 caused by congestion of the transport devices 20.

In the above embodiment, the management device 30 does not have to execute the task optimization process when receiving the task optimization request from the transport device 20. For example, when the transport device 20 is processing the tasks originally assigned in the task assignment process, the management device 30 may execute the task optimization process in predetermined cycles.

In the above embodiment, the transport device 20 transmits the task optimization request to the management device 30 during the task exchangeable period, and the management device 30 executes the task optimization process during the task exchangeable period. However, this is not a limitation. For example, the transport device 20 may transmit the task optimization request to the management device 30 in predetermined cycles while processing the tasks originally assigned in the task assignment process. The management device 30 executes the task optimization process in predetermined cycles.

In the above embodiment, the task exchangeable period is not limited to a period during which a transport device 20 is not carrying an item 200, that is, a period during which the transport device 20 is processing a traveling task.

In the task optimization process, the management device 30 may calculate the transport cost in a case where a transport task originally assigned in the task assignment process is exchanged with a pending transport task. In this case, when the calculated transport cost for processing the assigned task is less than the transport cost in a case where the pending transport task were to be assigned to one of the transport device 20, the management device 30 exchanges the transport task originally assigned in the task assignment process with the pending task. This allows the management device 30 to be applied to a case in which a new transport task is produced after the task assignment process.

## Claims

1. An automated transport system, comprising:
transport devices configured to process tasks including a transport task for transporting an item from a loading dock to a rack or transporting the item from the rack to the loading dock; and
a management device configured to manage the transport devices; wherein
the management device is configured to execute a task assignment process and a task optimization process,
the task assignment process assigns the tasks to the transport devices,
the task optimization process exchanges the transport tasks when any one of following conditions is satisfied:
the management device calculates a transport cost for when the transport task assigned in the task assignment process is exchanged between two separate ones of the transport devices, and the calculated transport cost is less than a transport cost of the tasks originally assigned in the task assignment process; and
the management device calculates the transport cost for when the transport task assigned in the task assignment process is exchanged with a pending transport task, and the calculated transport cost is less than the transport cost if the pending transport task were to be assigned to one of the transport devices, and
the management device executes the task optimization process during a period in which the transport devices are processing the tasks assigned in the task assignment process.

2. The automated transport system according to claim 1, wherein
the transport device sends a task optimization request to the management device, and
when the management device receives the task optimization request sent from the transport device, the task optimization process is executed.

3. The automated transport system according to claim 2, wherein
a task exchangeable period during which the transport task is exchangeable is set for each of the transport devices,
the transport devices each send the task optimization request to the management device during the task exchangeable period, and
the management device executes the task optimization process during the task exchangeable period.

4. The automated transport system according to claim 3, wherein the task exchangeable period is a period during a traveling task in which the corresponding one of the transport devices is carrying no item.
